# EUROPEAN PATENT APPLICATION

(11) **EP 1 707 920 A2**
(43) Date of publication of application: **04.10.2006**
(21) Application number: 06251597.8
(22) Date of filing: 24.03.2006
(51) Int. Cl.: G01C 19/56

(54) **Angular velocity sensor**

(30) Priority: 31.03.2005 JP 2005104441; 22.08.2005 JP 2005239711
(71) Applicant: Fujitsu Media Devices Limited, Yokohama-shi, Kanagawa 222-0033 (JP); Fujitsu Ltd., Kawasaki-shi, Kanagawa 211-8588 (JP)
(72) Inventor: Tanaka, Hiroshi c/o Fujitsu Media Devices Limited, Yokohama-shi Kanagawa 222-0033 (JP); Hosokawa,Toshinobu c/o Fujitsu Media Devices Ltd., Yokohama-shi Kanagawa 222-0033 (JP); Ohta, Kazuhiro c/o Fujitsu Media Devices Limited, Yokohama-shi Kanagawa 222-0033 (JP); Yachi, Masanori Fujitsu Media Devices Limited, Yokohama-shi Kanagawa 222-0033 (JP); Miyashita, Tsutomu c/o Fujitsu Media Devices Ltd., Yokohama-shi Kanagawa 222-0033 (JP); Ishikawa, Hiroshi Fujitsu Limited, Kawasaki-shi Kanagawa 211-8588 (JP)
(74) Representative: Hitching, Peter Matthew

(57) **Abstract**

An angular velocity sensor (100) includes a tuning fork resonator (10) having multiple arms (11, 12) that extend from a base, a single lead frame (20) that supports the base, and a package (30) that supports the single lead frame. The package and lead frame defines a space (31) therebetween.

## Description

### BACKGROUND OF THE INVENTION

### 1. Field of the Invention

This invention generally relates to angular velocity sensors, and more particularly, to an angular velocity sensor having a tuning fork resonator.

### 2. Description of the Related Art

Angular velocity sensors detect the angular velocity at the time of rotation, and are for use in the prevention of blurred images due to hand movement, automobile navigation system, and attitude control system of automobile or robot. International Publication No. WO 03/100350A1 (hereinafter, referred to as Document 1) discloses the angular velocity sensor having the tuning fork resonator. Generally, the tuning fork resonator is supported by a substrate or the like. When the vibration of the tuning fork resonator is transmitted to the substrate, the detection accuracy or detection effectiveness will degrade. Therefore, there is a need for a supporting structure that does not cause the vibration to transmit to the supporting substrate. The supporting substrate of the resonator is described in, for example, Document 1, Japanese Patent Application Publication No. 11-230758 (hereinafter, referred to as Document 2), and Japanese Patent Application Publication No. 2005-10034 (hereinafter, referred to as Document 3). Document 2 discloses a structure in which the tuning fork resonator is directly adhered to the package. Document 3 discloses another structure in which the supporting plate that supports multiple arms is supported by four lead wires and one ends of the lead wires are attached to the supporting plate and the other ends thereof are attached to the package.

In the supporting structure described in Document 2, however, the vibration of the tuning fork resonator is directly transmitted to the package, since the tuning fork resonator is directly adhered to the package. This causes a problem that the frequency of the tuning fork resonator changes, when the package is secured to a circuit board or the like. In addition, in the supporting structure described in Document 3, the resonator is supported by four lead wires. This increases the number of parts and man-hours for assembling, and thereby increases the production costs. Also, the resonator is supported by four points, and this makes it difficult to support the resonator with accuracy in a given direction, for example, in a direction parallel to the bottom face of the package. If the accuracy of attachment is insufficient, the detection accuracy will degrade.

### SUMMARY OF THE INVENTION

The present invention has been made in view of the above circumstances and provides an angular velocity sensor that has an excellent detection accuracy and excellent productivity with a simple structure.

According to one aspect of the present invention, preferably, there is provided an angular velocity sensor including: a tuning fork resonator having multiple arms that extend from a base; a single lead frame that supports the base; and a package that supports the single lead frame. The package and lead frame define a space therebetween. With the afore-described configuration, it is possible to provide the angular velocity sensor that has an excellent detection accuracy and excellent productivity with a simple structure.

According to another aspect of the present invention, preferably, there is provided an angular velocity sensor including: multiple units, each of the multiple units including a tuning fork resonator and a single lead frame, the tuning fork resonator having multiple arms that extend from a base, the single lead frame supporting the base; and a package that houses the multiple units. The multiple units are arranged in the package so that the multiple units have different angular velocity detection axes. With the afore-described configuration, it is possible to provide the angular velocity sensor having multiple detection axes that is excellent in detection accuracy and productivity with a simple structure.

According to still another aspect of the present invention, preferably, there is provided an angular velocity sensor including: multiple angular velocity sensor elements; and a circuit board on which the multiple angular velocity sensor elements are mounted. Each of the multiple angular velocity sensor elements includes a tuning fork resonator, a single lead frame, and a package, the tuning fork resonator having multiple arms that extend from a base, the single lead frame supporting the base, the package supporting the single lead frame; and the package and the single lead frame defines a space.

### BRIEF DESCRIPTION OF THE DRAWINGS

Preferred embodiments of the present invention will be described in detail with reference to the following drawings, wherein:
FIG. 1A through FIG. 1D show an angular velocity sensor in accordance with a first embodiment of the present invention;
FIG. 2 is a graph showing the effect of a space provided in accordance with the first embodiment of the present invention, in contrast with a comparative example;
FIG. 3 is a graph showing the relationship between a free length (of a non-secured area) of the base and the change rate of the frequency;
FIG. 4 shows a tuning fork resonator to explain an arm width and a free length;
FIG. 5A through FIG. 5H show alternative configurations of a lead frame;
FIG. 6 is a graph showing the effect of the lead frame having a trapezoid-shaped or an M-shaped cross-section;
FIG. 7A and FIG. 7B show an electrode pattern of the tuning fork resonator provided in accordance with the first embodiment of the present invention;
FIG. 8A through FIG. 8C show the angular velocity sensor in accordance with the first embodiment of the present invention;
FIG. 9A through FIG. 9C show a circuit board for use in accordance with a second embodiment of the present invention;
FIG. 10A through FIG. 10C show the angular velocity sensor in accordance with the second embodiment of the present invention;
FIG. 11 shows the angular velocity sensors in accordance with the first embodiment of the present invention being mounted on the circuit board;
FIG. 12A and FIG. 12B show the angular velocity sensor in accordance with a third embodiment of the present invention;
FIG. 13A and FIG. 13B show slanted arrangement of the angular velocity sensors in accordance with the third embodiment of the present invention;
FIG. 14A through FIG. 14E show the angular velocity sensor in accordance with a fourth embodiment of the present invention;
FIG. 15A through FIG. 15D show the angular velocity sensor in accordance with a fifth embodiment of the present invention;
FIG. 16A and FIG. 16B show the angular velocity sensor in accordance with a sixth embodiment of the present invention;
FIG. 17A and FIG. 17B show the angular velocity sensor having an alternative configuration in accordance with the sixth embodiment of the present invention;
FIG. 18 is a perspective view of the angular velocity sensor in accordance with a seventh embodiment of the present invention; and
FIG. 19 is an exploded perspective view of the angular velocity sensor in accordance with an eighth embodiment of the present invention.

### DESCRIPTION OF THE PREFERRED EMBODIMENTS

A description will now be given, with reference to the accompanying drawings, of embodiments of the present invention.

### (First Embodiment)

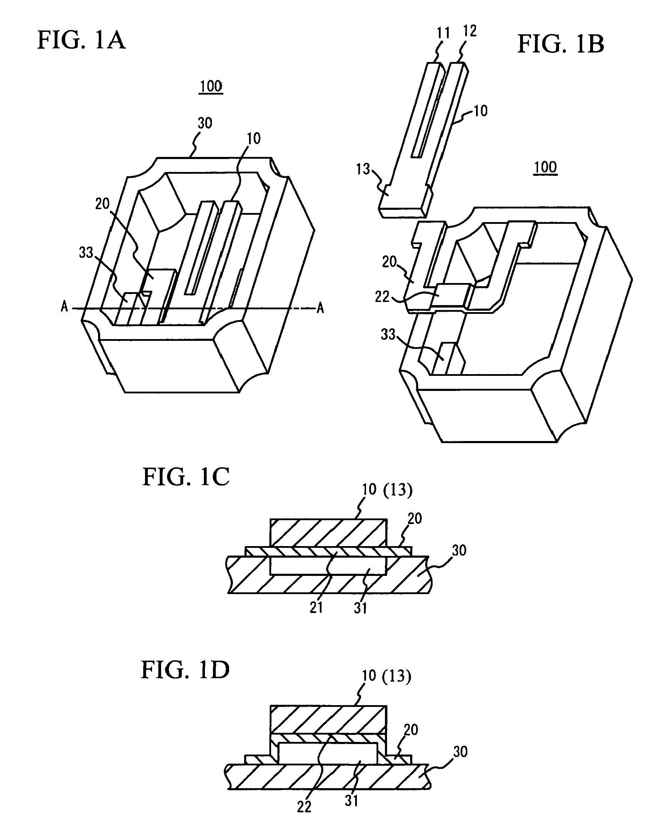

FIG. 1A through FIG. 1D show an angular velocity sensor 100 in accordance with a first embodiment of the present invention. FIG. 1A is a perspective view of the angular velocity sensor 100. FIG. 1B is an exploded perspective view of the angular velocity sensor 100. FIG. 1C is a cross-sectional view taken along a line A-A shown in FIG. 1A. FIG. 1D is another cross-sectional view taken along a line A-A shown in FIG. 1A, and has an alternative configuration of the angular velocity sensor 100 shown in FIG. 1C.

The angular velocity sensor 100 shown in FIG. 1A through FIG. 1D includes a tuning fork resonator 10, a single lead frame 20, and a package 30 made of ceramics. The tuning fork resonator 10 includes a base 13 and two arms 11 and 12. The arms 11 and 12 are separately provided, and both of them extend from the base 13 in an identical direction. The lead frame 20 has the effect of supporting the base 13, and has a planar U-shape. Here, "U-shape" denotes that the fundamental shape is U-shaped, yet needs not exactly be U-shaped. Instead of U-shape, C-shape is also applicable. In other words, the lead frame 20 includes a middle portion and two portions that extend from both ends of the middle portion on a same side. The lead frame 20 that supports the base 13 of the tuning fork resonator 10 has two types of configuration, which are shown in FIG. 1C and FIG. 1D. The package 30 also has two types of configuration, as shown in FIG. 1C and FIG. 1D.

In the configuration shown in FIG. 1C, the lead frame 20 has a shape of plane plate, and has a plane portion 21 that supports the base 13. A recess 31 is provided on a surface (bottom face) of the package 30 that supports the lead frame 20. A space defined by the recess 31 of the package 30 is provided below the plane portion 21 of the lead frame 20. That is, the space 31 is formed between the package 30 and the lead frame 20. In the configuration shown in FIG. 1C, the space 31 has a width substantially identical to that of the base 13. The space 31 modifies the stiffness of the lead frame 20 such that the lead frame 20 is flexible, thereby making it difficult to transmit the vibration of the tuning fork resonator 10 to the package 30. This enables to suppress the change of the frequency, when the package 30 is secured to a wiring substrate. In the configuration in which the base 13 is supported above the space 31 via the lead frame 20, there is the effect that the vibration (disturbance noise) applied from the package 30 is difficult to be transmitted to the tuning fork resonator 10.

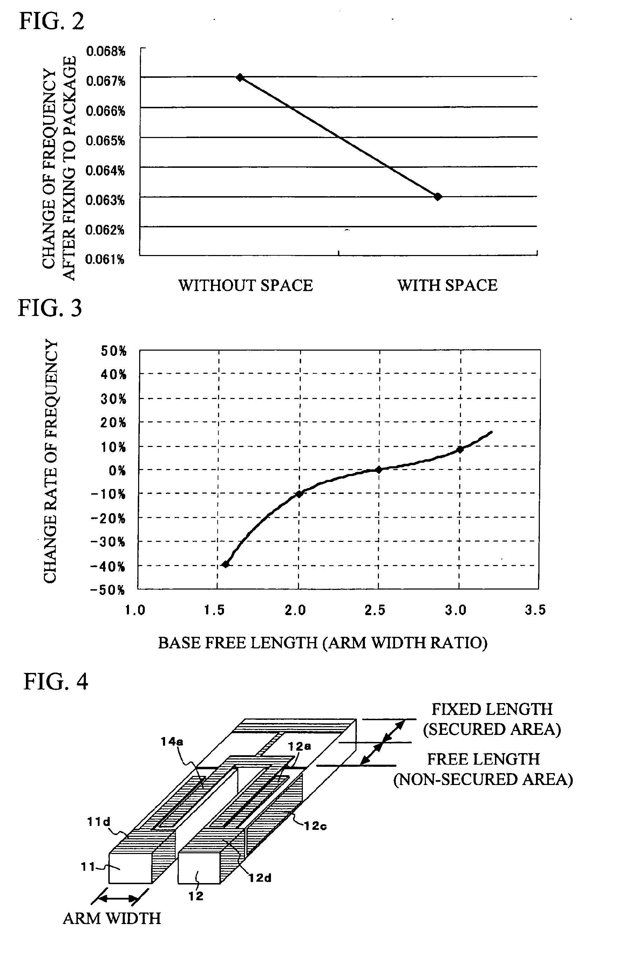

FIG. 2 is a graph showing the effect of the space 31. FIG. 2 also shows the characteristic of a case where the space 31 is not provided by changing the structure shown in FIG. 1C, as a comparative example. The horizontal axis denotes the cases where the space is provided and the space is not provided. The vertical axis denotes the change amount in frequency (%), if the package 30 is secured to a given member. This graph exhibits that the change in vibration frequency is suppressed by providing the space 31 below the single lead frame 20.

FIG. 3 is a graph showing the relationship between a free length (of a non-secured area) of the base 13 and change rates in frequency. The horizontal axis of FIG. 3 denotes the ratio of the free length to a width of the arm 11 or 12. The vertical axis denotes the change rates (%) in frequency. Here, the ratio of 2.5 is set as a reference value. As shown in FIG. 4, the free length denotes a length of the non-secured area in the base 13, when the base 13 is divided into two areas. There are a secured area that is secured to the lead frame 20 and the afore-described non-secured area that is not secured to the lead frame 20. Referring back to FIG. 3, if the free length is less than 2.0, the change rate of the frequency is intense and causes the increased variation after mounting. Accordingly, it is understood that the increased variation after mounting can be suppressed by setting the free length 2.0 or more.

The lead frame 20 shown in FIG. 1D has a bending portion 22 having an inverted U-shaped cross-section. The bending portion 22 supports the base 13. The bending portion 22 defines the space 31. The sides of the bending portion 22 face each other, and are formed in parallel with each other in FIG. 1D, yet may be slanted. The bottom face of the package 30 is plane, which is different from that shown in FIG. 1C. The lead frame 20 shown in FIG. 1B has the same configuration as shown in FIG. 1D. The bending portion 22 is adhered to the base 13 on the whole contact portion. The lead frame 20 and the base 13 are secured by an adhesive such as epoxy-based resin adhesive, for example, in FIG. 1C and FIG. 1D. The lead frame 20 and the base 13 can be secured with high productivity.

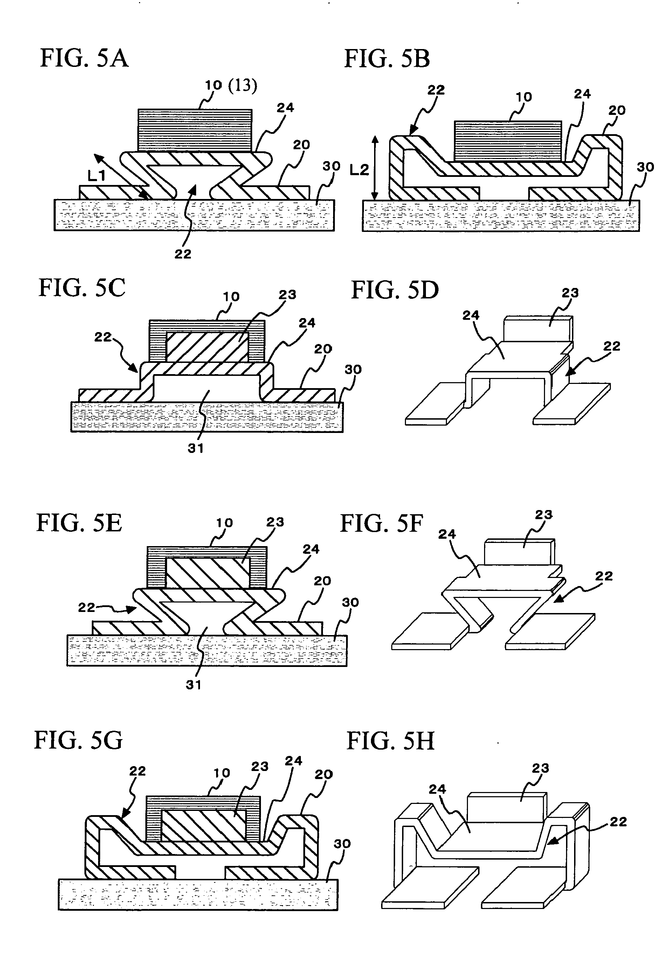

The lead frame 20 may have alternative configurations, as shown in FIG. 5A through FIG. 5H. The lead frame 20 shown in FIG. 5A has the bending portion 22 having a trapezoid-shaped cross-section. The lead frame 20 shown in FIG. 5B has the bending portion 22 having a substantially M-shaped cross-section. The lead frame 20 of the afore-mentioned substantially trapezoid-shaped cross-section has a length L1 that is longer than that of the lead frame 20 having an inverted U-shaped cross-section. The length L1 defines a length extending from a plane portion 24 that supports the base 13 to the package 30. Similarly, the lead frame 20 having a substantially M-shaped cross-section has a length L2, which is longer than that of the lead frame 20 having an inverted U-shaped cross-section. The length L2 defines a length of a supporting portion that supports the plane portion 24.

The lead frames 20 shown in FIG. 5C, FIG. 5E, and FIG. 5G respectively include a folding portion 23 having an L-shape. The folding portion 23 having an L-shape is provided with the plane portion 24 for supporting the base 13, and increases a supporting area in the lead frame 20 that supports the base 13. This enhances a bonding strength. FIG. 5D is a perspective view showing only the lead frame 20 shown in FIG. 5C. FIG. 5F is a perspective view showing only the lead frame 20 shown in FIG. 5E. FIG. 5H is a perspective view showing only the lead frame 20 shown in FIG. 5G.

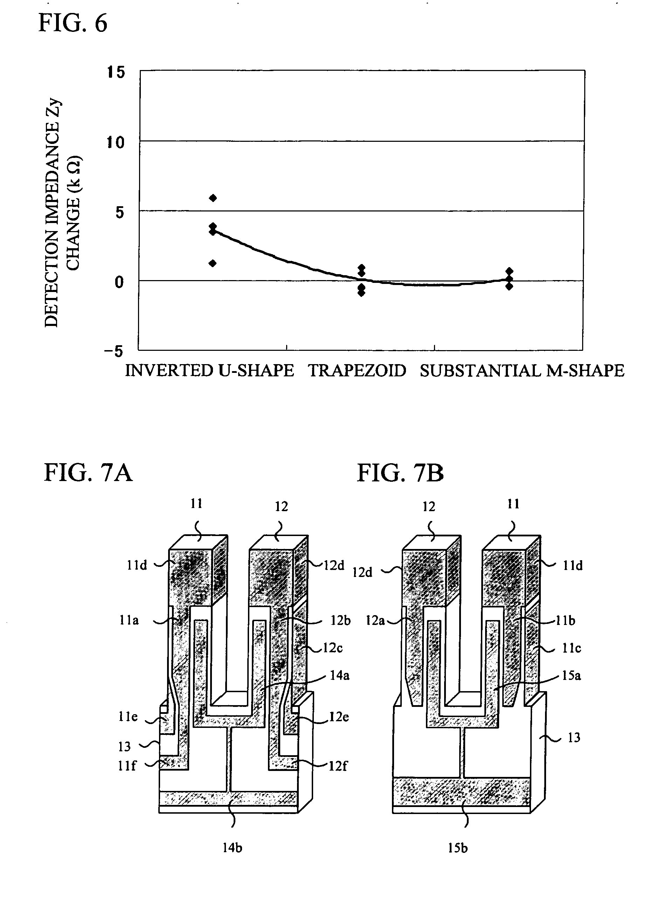

FIG. 6 is a graph showing the effect of the lead frame 20 having a trapezoid-shaped or an M-shaped cross-section. As a comparative example, FIG. 6 also shows the characteristic of the lead frame 20 having an inverted U-shaped cross-section. The horizontal axis in FIG. 6 denotes the shape of a single lead frame 20, and the vertical axis denotes impedance (Zy) change amount (kΩ) of the tuning fork resonator 10 in a case where the package 30 is secured to a given member. The lengths L1 and L2 of the lead frame 20 respectively having a trapezoid-shaped and an M-shaped cross-section can be configured longer than the length of the lead frame 20 having an inverted U-shaped cross-section. This improves the flexibility of the lead frame 20, and the impedance change amount is suppressed.

Preferably, the lead frame 20 is made of a material having a coefficient of thermal expansion that is close to that of the material of the tuning fork resonator 10. For example, if the tuning fork resonator 10 is made of lithium niobate (coefficient of thermal expansion: 15.4 × 10⁻⁶ /°C), the lead frame 20 is made of SUS (coefficient of thermal expansion: 17.3 X 10⁻⁶ /°C) or phosphor bronze (coefficient of thermal expansion: 17.8 × 10⁻⁶ /°C). The package 30 is made of alumina (Al₂O₃) having a coefficient of thermal expansion of 7.8 × 10⁻⁶ /°C. The package 30 is preferably composed of a structure in which multiple ceramic substrates are deposited. The package 30 includes wired layers arranged in the interlayers. The wired layers have via holes that connect the wired layers formed in different layers.

Next, the tuning fork resonator 10 is described. Electrodes are formed as shown in FIG. 7A and FIG. 7B. FIG. 7A shows a front side of the tuning fork resonator 10. FIG. 7B shows a backside of the tuning fork resonator 10. Detection electrodes 11a, 11b, and 11c are provided in the arm 11. The detection electrodes 11a and 11b are coupled via an electrode 11d. The detection electrode 11a includes an extraction electrode 11f. The electrode 11c is connected to an extraction electrode 11e. Similarly, detection electrodes 12a, 12b, and 12c are provided in the arm 12. The detection electrodes 12a and 12b are coupled via an electrode 12d. The detection electrode 12a includes an extraction electrode 12f. The electrode 12c is connected to an extraction electrode 12e. A drive electrode 14a is provided on the front side of the tuning fork resonator 10, and is connected to an extraction electrode 14b. Similarly, a drive electrode 15a is provided on the backside of the tuning fork resonator 10, and is connected to an extraction electrode 15b. Here, the shape of the base 13 in the tuning fork resonator 10 shown in FIG. 7A and FIG. 7B is slightly different from that shown in FIG. 1. The base 13 of the tuning fork resonator 10 shown in FIG. 7A and FIG. 7B is a variation example of the tuning fork resonator 10 shown in FIG. 1. The base 13 shown in FIG. 1 has a wide portion, to which the above-described lead frame 20 is attached. However, the width of the base 13 shown in FIG. 7A and FIG. 7B is uniform, and the base 13 can be positioned at an arbitrary place of the lead frame 20 in a direction of a detection axis.

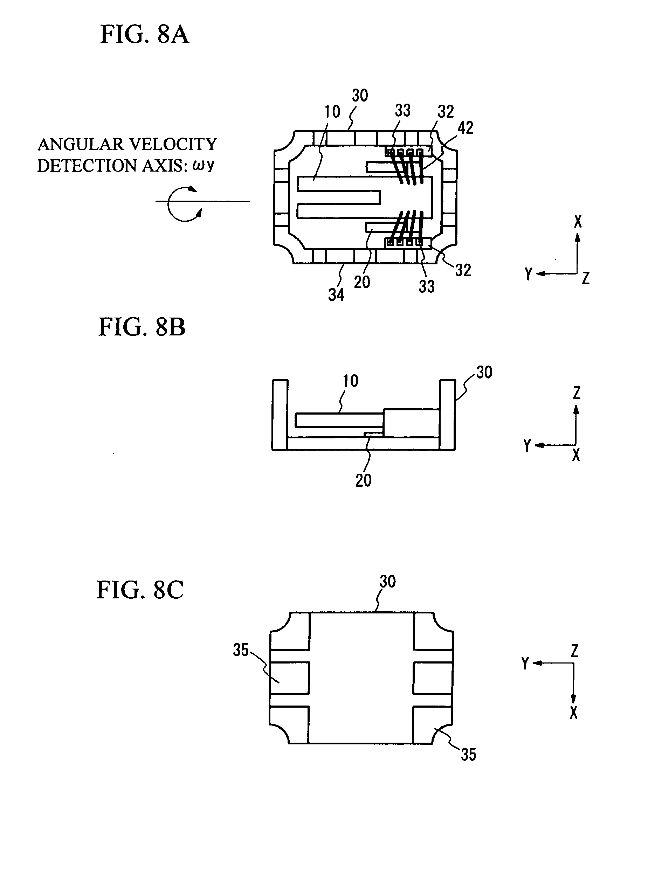

The extraction electrodes shown in FIG. 7A and FIG. 7B are bonded to pads (terminals) 32 provided on the package 30 by wires 42, as shown in FIG. 8A, for example. The pads 32 are formed on banks 33, and are coupled to the wiring provided on the package 30. Here, FIG. 8A is a plan view of the angular velocity sensor 100. FIG. 8B is a cross-sectional view of the angular velocity sensor 100. FIG. 8C is a bottom view of the angular velocity sensor 100. A top face of the package 30 is open, and an external connection pad (terminal) 34 is formed on an attached surface of the package 30 having a ring shape. The external connection pad 34 is coupled to the electrodes of the tuning fork resonator 10 via an internal wiring of the package 30. An external connection pad (terminal) 35 to be connected to the internal wiring of the package 30 is formed on the bottom face of the package 30. FIG. 8A through FIG. 8C respectively show coordinate axes X, Y, and Z. The angular velocity sensor 100 detects an angular velocity ωy around Y-axis.

### (Second Embodiment)

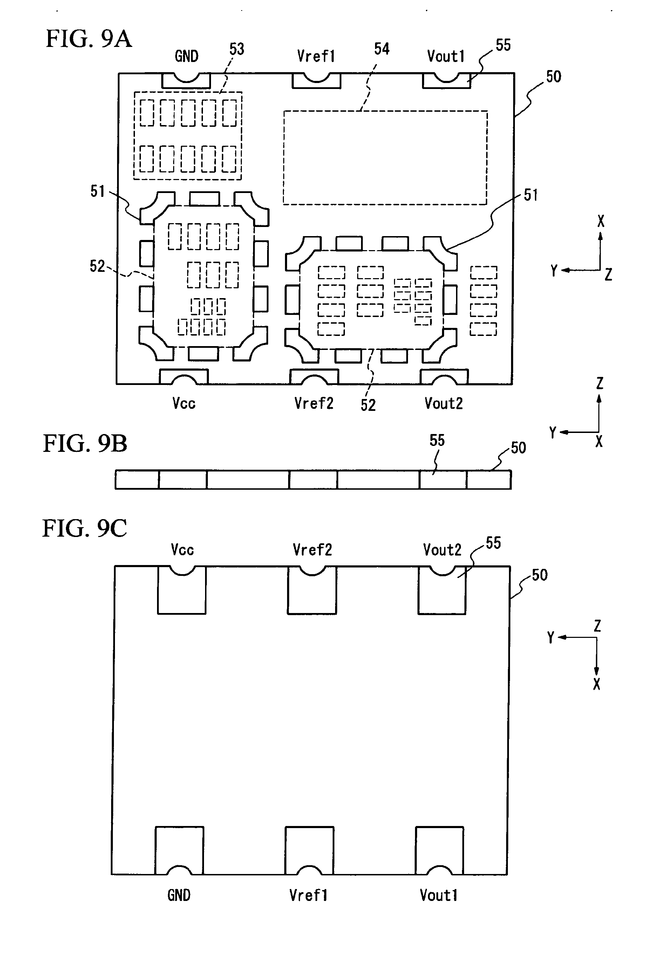

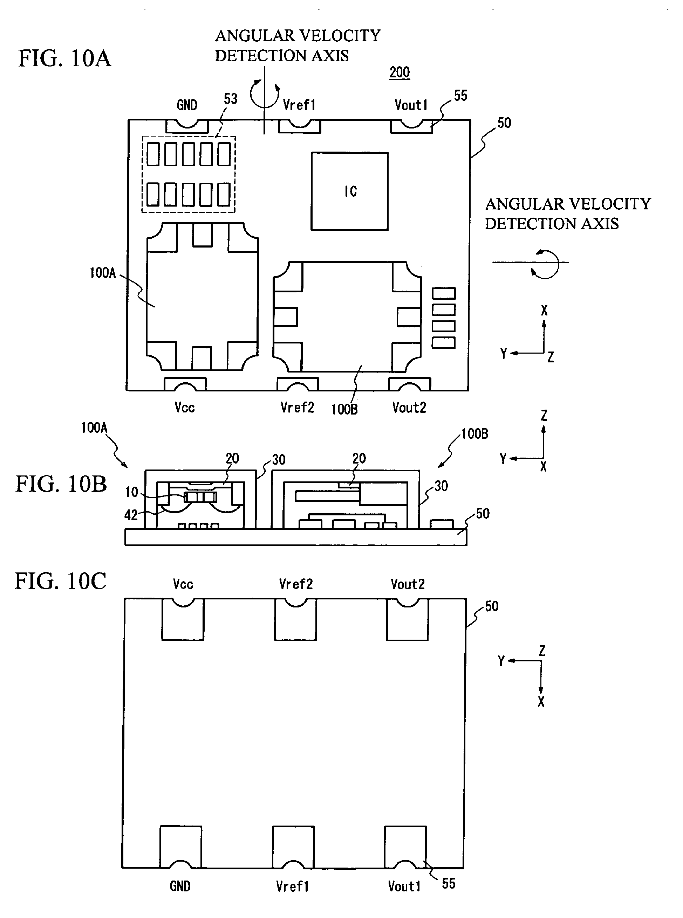

FIG. 9A through FIG. 9C and FIG. 10A through FIG. 10C are views showing an angular velocity sensor 200 in accordance with a second embodiment of the present invention. The angular velocity sensor 200 includes two angular velocity sensors 100 (hereinafter, referred to as angular velocity sensor elements 100A and 100B) in accordance with the first embodiment of the present invention to detect the angular velocities around two-axis directions.

FIG. 9A is a plan view of a circuit board 50 that mounts the angular velocity sensor elements 100A and 100B. FIG. 9B is a side view of the circuit board 50. FIG. 9C is a bottom view of the circuit board 50. FIG. 10A is a plan view of the angular velocity sensor 200, which includes two angular velocity sensor elements 100A and 100B in accordance with the first embodiment of the present invention mounted on the circuit board 50. FIG. 10B is a side view of the angular velocity sensor 200, and is a perspective view of the inside of the package 30. FIG. 10C is a bottom view of the angular velocity sensor 200. As shown in FIG. 10A, the angular velocity sensor elements 100A and 100B are provided on the circuit board 50 so that the angular velocity sensor elements 100A and 100B can respectively detect the angular velocities around an X-axis direction and Y-axis direction. The circuit board 50 is commonly provided to the angular velocity sensor elements 100A and 100B. As shown in FIG. 10B, the angular velocity sensor elements 100A and 100B are mounted on the circuit board 50 with opening surfaces thereof facing below. That is to say, the angular velocity sensor elements 100A and 100B are sealed with the circuit board 50 that is commonly provided. As shown in FIG. 9A, the circuit board 50 includes the external connection pad 34 that is shown in FIG. 8A, which is provided for the angular velocity sensor elements 100A and 100B, and also includes pads (terminals) 51 for electrical coupling. For example, anisotropic conductive adhesive in paste form is employed for this coupling.

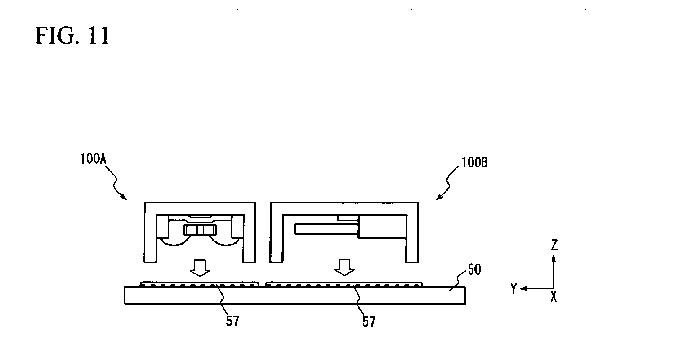

Referring now to FIG. 11, an anisotropic conductive adhesive 57 is provided on the circuit board 50 to adhesively secure the angular velocity sensor elements 100A and 100B. The electrical coupling is established between the angular velocity sensor elements 100A and 100B and the circuit board 50.

Referring back to FIG. 9A, the arrangement of the pads 51 corresponds to that of the pads 34. A region on the circuit board 50 surrounded by the pads 51 serves as a part mounting region 52. Electronic parts such as resistors, capacitors, and the like are shown in rectangles, and are mounted on the circuit board 50. Referring to FIG. 10B, the electronic parts in the part mounting region 52 are sealed with the packages 30 of the angular velocity sensor elements 100A and 100B. The circuit board 50 may be composed of a single layer or multiple layers. The circuit board 50 also includes another part mounting region 53 and an IC mounting region 54. One or more ICs can be mounted on the IC mounting region 54. Castellations (connecting channels) 55 are formed on two sides of the circuit board 50, and the external connection pads are integrally formed with the castellations 55 on the bottom face of the circuit board 50 shown in FIG. 9C and FIG. 10C. Vcc denotes power supply voltage, GND denotes ground, Vref1 and Vref2 respectively denote reference voltages of the angular velocity sensor elements 100A and 100B, and Vout1 and Vout2 respectively denote output voltages of the angular velocity sensor elements 100A and 100B. The castellations 55 are respectively coupled to the corresponding electrodes of the tuning fork resonator 10.

The angular velocity sensor elements 100A and 100B are configured in accordance with the first embodiment of the present invention. Accordingly, it is possible to suppress the change in frequency that occurs before and after the angular velocity sensor elements 100A and 100B are mounted on the circuit board 50, thereby enabling to provide two-axis angular velocity sensor having high detection accuracy. In addition, a single circuit board 50 is commonly provided to two angular velocity sensor elements 100A and 100B, thereby making it possible to downsize the angular velocity sensor 200.

### (Third Embodiment)

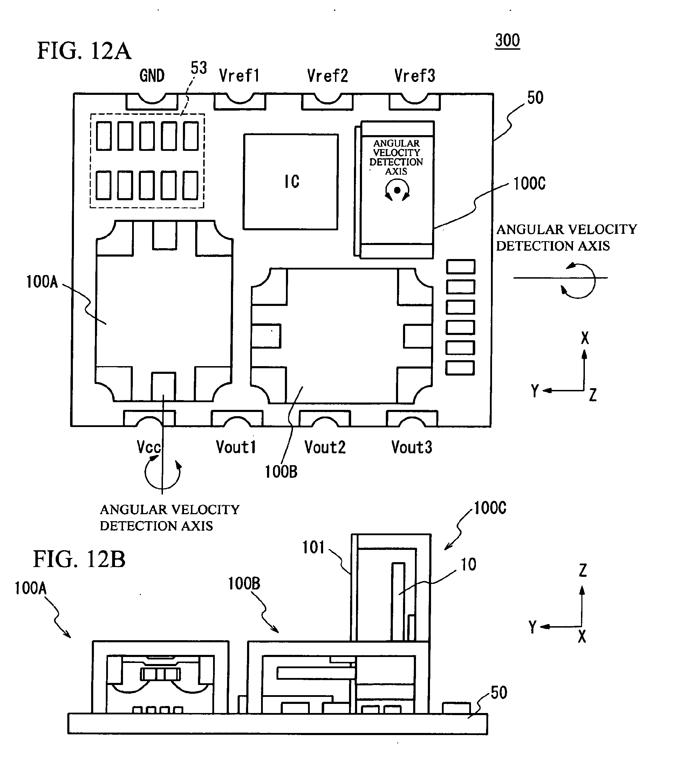

FIG. 12A and FIG. 12B show an angular velocity sensor 300 in accordance with a third embodiment of the present invention. The angular velocity sensor 300 is capable of detecting the angular velocities in three-axis directions. FIG. 12A is a plan view of the angular velocity sensor 300. FIG. 12B is a side view of the angular velocity sensor 300, and is a perspective view of the inside of the package 30. The angular velocity sensor 300 shown in FIG. 12A and FIG. 12B additionally includes an angular velocity sensor 100C arranged on the IC mounting region 54 shown in FIG. 9A, in addition to the above-described angular velocity sensor 200. The angular velocity sensor 100C is mounted on the circuit board 50 to detect the angular velocity around Z-axis in such a manner that the tuning fork resonator 10 is provided perpendicularly to the circuit board 50. A pad may be provided on the side face of a shorter side of the package 30 of the angular velocity sensor 100C to establish an electrical or mechanical connection with the circuit board 50. Alternatively, a vertical type of angular velocity sensor, as will be described later, may be employed. A cap 101 is provided on the opening surface of the package 30 in the angular velocity sensor 100C to seal the inside of the package 30.

The angular velocity sensor elements 100A, 100B, and 100C respectively have the configuration in accordance with the first embodiment of the present invention, and thereby it is possible to suppress the change in frequency that occurs before and after they are mounted on the circuit board 50. It is therefore possible to provide three-axis angular velocity sensor having high detection accuracy. A single circuit board 50 is commonly provided to the three angular velocity sensor elements 100A, 100B, and 100C, thereby enabling to reduce the size of the angular velocity sensor 300.

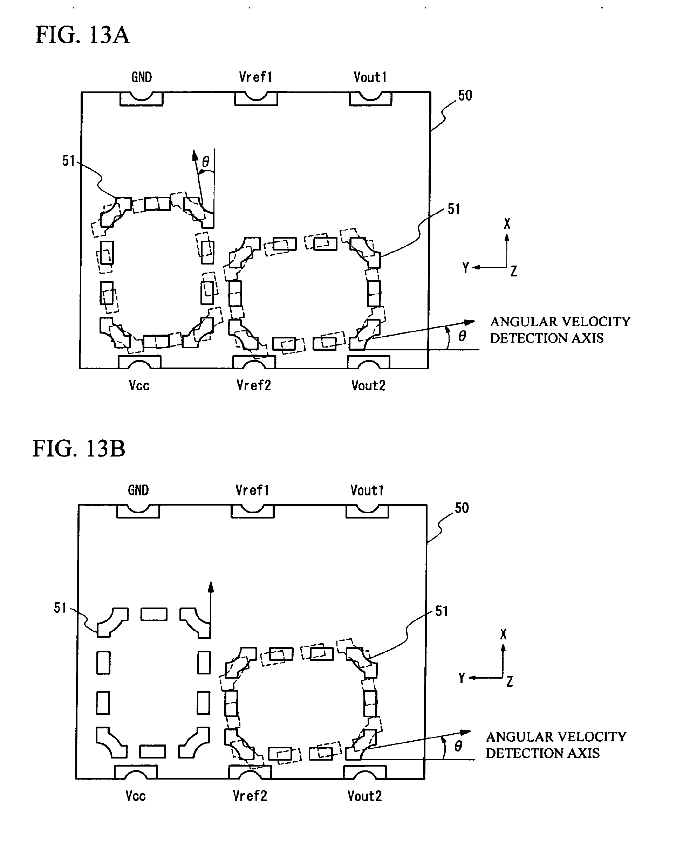

Here, the arrangement of the pads 51 provided on the circuit board 50 is described. The arrangement of the pads 51 shown in FIG. 9A is determined such that the angular velocity around Z-axis and Y-axis can be detected. The pads 51 may be arranged in such a manner that the angular velocity sensor elements 100A and 100B are slanted at a given angle θ with respect to the X-axis and/or Y-axis, as shown in FIG. 13A and FIG. 13B. FIG. 13A shows the arrangement of the pads 51 in a case where both the angular velocity sensor elements 100A and 100B are slanted at a given angle θ. FIG. 13B shows the arrangement of the pads 51 in a case where only the angular velocity sensor 100B is slanted at a given angle θ. In this manner, only with the arrangement of the pads 51, it is possible to adjust the axis around which the angular velocity is detected arbitrarily and easily.

### (Fourth Embodiment)

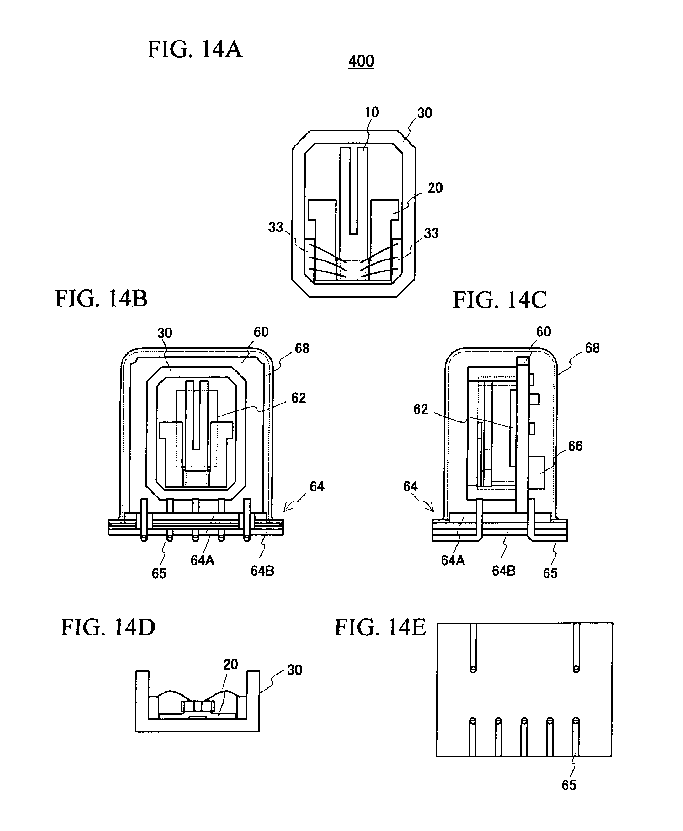

FIG. 14A through FIG. 14E show an angular velocity sensor 400 in accordance with a fourth embodiment of the present invention. The angular velocity sensor 400 includes the angular velocity sensor 100 sealed with a cap and the tuning fork resonator 10 provided in a direction perpendicular to a mounting surface of the angular velocity sensor 400. FIG. 14A is a plan view of the angular velocity sensor 100 shown in FIG. 8A. FIG. 14B is a front perspective view of the angular velocity sensor 400 having the angular velocity sensor 100 inside thereof. FIG. 14C is a side view of the angular velocity sensor 400. FIG. 14D is a side view of the angular velocity sensor 100. FIG. 14E is a bottom view of the angular velocity sensor 400.

The angular velocity sensor 400 includes a circuit board 60 and a supporting substrate 64. The circuit board 60 supports the package 30. The supporting substrate 64 supports the circuit board 60 in a direction perpendicular to a mounting surface of the angular velocity sensor 400. An opening surface of the package 30 is attached to the circuit board 60. An electronic part 62 is mounted on the circuit board 60, and the package 30 is positioned to cover the electronic part 62. An electronic part 66 is also provided on a backside of the circuit board 60. The tuning fork resonator 10 faces the electronic part 62. The circuit board 60 is supported by the supporting substrate 64, and the detection axis of the tuning fork resonator 10 corresponds to a direction perpendicular to the supporting substrate 64. The supporting substrate 64 includes a stem 64A, a printed circuit board 64B that is a circuit board, and external connection pins 65. The external connection pins 65, partially excluded, are coupled to the pad provided on the backside of the circuit board 60, and are coupled to the electrode of the tuning fork resonator 10 via the wiring formed on the circuit board 60. The external connection pins 65 extend from the center of the bottom face of the printed circuit board 64B, to the ends in both directions, which correspond to the shorter side of the printed circuit board 64B, through the stem 64A and the printed circuit board 64B. The printed circuit board 64B are composed of multiple layers. A cap 68 covers the package 30, the circuit board 60, and the stem 64A, to hermetically seal the inside of the angular velocity sensor 400. The cap 68 is secured to the printed circuit board 64B by use of an adhesive, for example.

The angular velocity sensor 400 includes the angular velocity sensor 100. It is therefore possible to suppress the change in frequency that occurs before and after the angular velocity sensor 100 is mounted on the circuit board 60 and to provide the angular velocity sensor having high detection accuracy. Here, the angular velocity sensor 400 may serve as the angular velocity sensor 100C shown in FIG. 12A and FIG. 12B.

### (Fifth Embodiment)

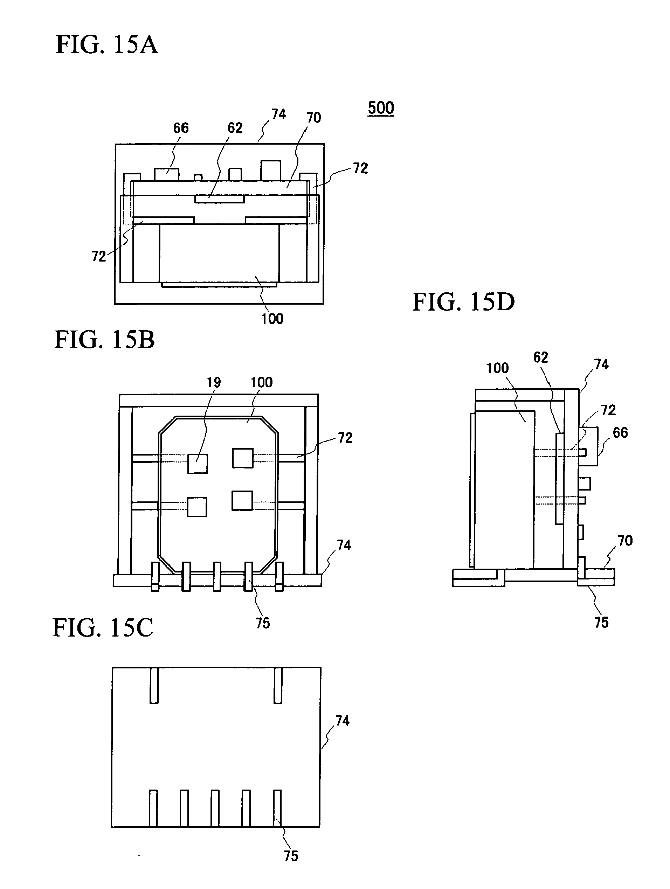

FIG. 15A through FIG. 15D show an angular velocity sensor 500 in accordance with a fifth embodiment of the present invention. The angular velocity sensor 500 includes the angular velocity sensor 100 shown in FIG. 8A through FIG. 8C and the tuning fork resonator 10, which is retained in a direction perpendicular to the mounting surface of the angular velocity sensor 500. FIG. 15A is a plan view of the angular velocity sensor 500. Fig. 15B is a front perspective view of the angular velocity sensor 500. FIG. 15C is a side view of the angular velocity sensor 500. FIG. 15D is a bottom view of the angular velocity sensor 500. The angular velocity sensor 100 is mounted on a supporting substrate 74 made of mold. A circuit board 70 is also is mounted on the supporting substrate 74 in a same manner. The angular velocity sensor 100 and the circuit board 70 are separately provided. Multiple pads 19 are provided on the backside of the package 30 of the angular velocity sensor 100. The pads 19 are coupled to the electrode of internally provided tuning fork resonator 10 via the wiring in the package 30. Connection members 72 having a pin shape are connected to the pads 19. The connection members 72 extend on one face of the circuit board 70 on which an electronic part 66 is provided, and are connected to the pads formed thereon. The electronic part 62 is provided on another face of the circuit board 70. The electronic part 62 faces the package 30. Connection pins 75 are provided on the supporting substrate 74, and are, partially excluded, electrically coupled to the pad provided on the circuit board 70. It is possible to establish the connection between the tuning fork resonator 10 and the outside, via the connection pins 75.

The angular velocity sensor 500 includes the angular velocity sensor 100. It is therefore possible to suppress the change in frequency that occurs before and after the angular velocity sensor 100 is mounted on the circuit board 70 and to provide the angular velocity sensor having high detection accuracy.

### (Sixth Embodiment)

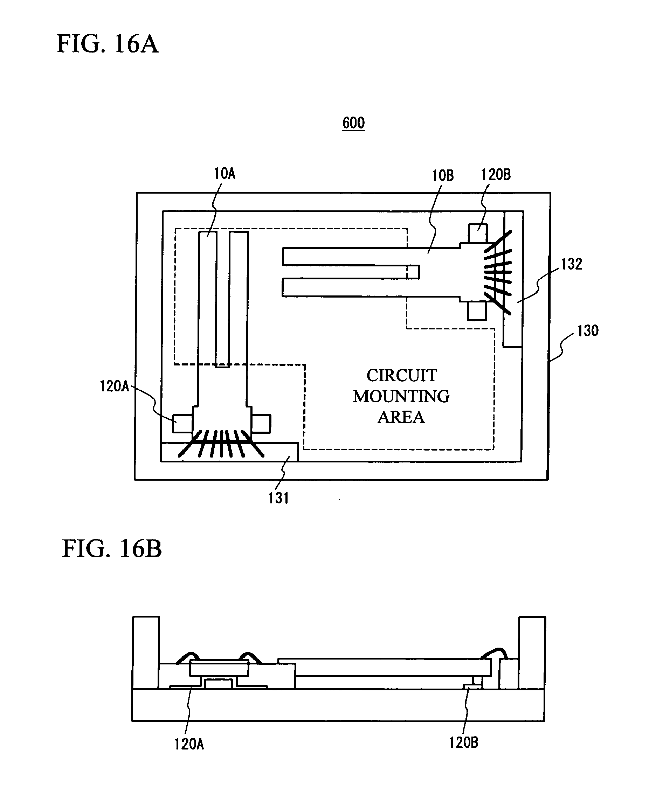

FIG. 16A and FIG. 16B show an angular velocity sensor 600 in accordance with a sixth embodiment of the present invention. FIG. 16A is a plan view of the angular velocity sensor 600. FIG. 16B is a side perspective view of the angular velocity sensor 600. In accordance with the sixth embodiment of the present invention, a single package 130 includes two tuning fork resonators 10A and 10B. The tuning fork resonators 10A and 10B are arranged perpendicularly to each other. The tuning fork resonators 10A and 10B have the same configuration as the above-described tuning fork resonator 10, and are respectively supported by single lead frames 120A and 120B. Here, a unit respectively defines a configuration having the tuning fork resonator 10A and the lead frame 120A, and a configuration having the tuning fork resonator 10B and the lead frame 120B. The lead frames 120A and 120B have a linear and planar shape, and have an inverted U-shaped cross-section. The inverted U-shaped cross-section is formed by bending the lead frame in a similar fashion as bending the lead frame 20, as shown in FIG. 1D. The bending portions respectively define a space between the lead frame 120A and the package 130 and another space between the lead frame 120B and the package 130. The tuning fork resonators 10A and 10B are respectively connected by wires to the pads provided on banks 131 and 132 inside the package 130. For example, a metal cap, not shown, can be attached on the opening surface of the package 130 to hermetically seal the inside of the package 130.

With the unit having the above-described configuration, it is possible to suppress the change in frequency that occurs before and after the angular velocity sensor 600 is mounted on the circuit board, and it is also possible to provide a two-axis angular velocity sensor having high detection accuracy. The tuning fork resonators 10A and 10B are capable of effectively preventing the interference applied through the package 130, and are also capable of detecting the angular velocities around two axes with high detection accuracy whereas they have small sizes.

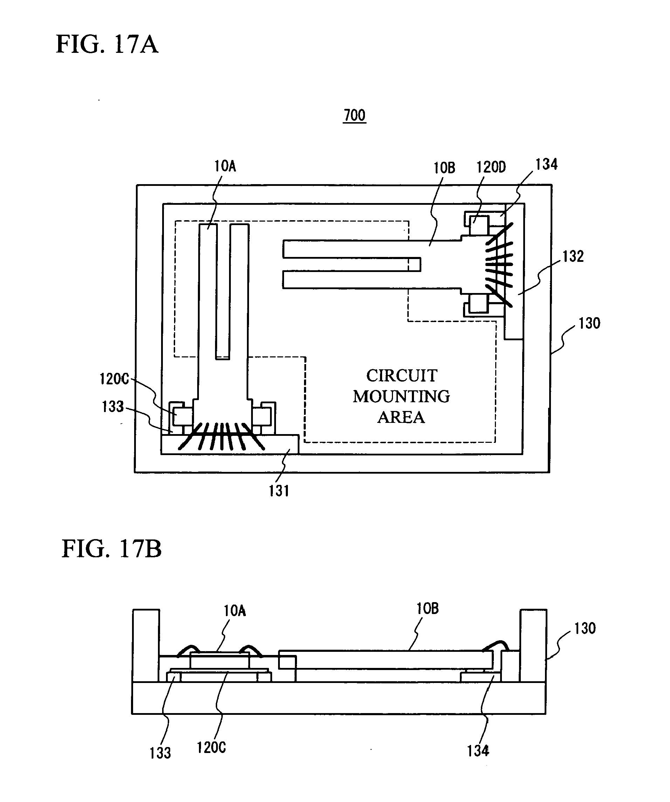

FIG. 17A and FIG. 17B show an angular velocity sensor 700 having an alternative configuration in accordance with the sixth embodiment of the present invention. FIG. 17A is a plan view of the angular velocity sensor 700. FIG. 17B is a side perspective view of the angular velocity sensor 700. The tuning fork resonator 10A and 10B are respectively supported by lead frames 120C and 120D having a linear and planar shape. The lead frames 120C and 120D are respectively attached onto a pair of projections 133 and 134. The projections 133 and 134 respectively form a space between the lead frame 120C and the package 130 and another space between the lead frame 120D and the package 130. Accordingly, it is possible to suppress the change in frequency that occurs before and after the angular velocity sensor 700 is mounted on the circuit board and to provide two-axis angular velocity sensor having high detection accuracy.

### (Seventh Embodiment)

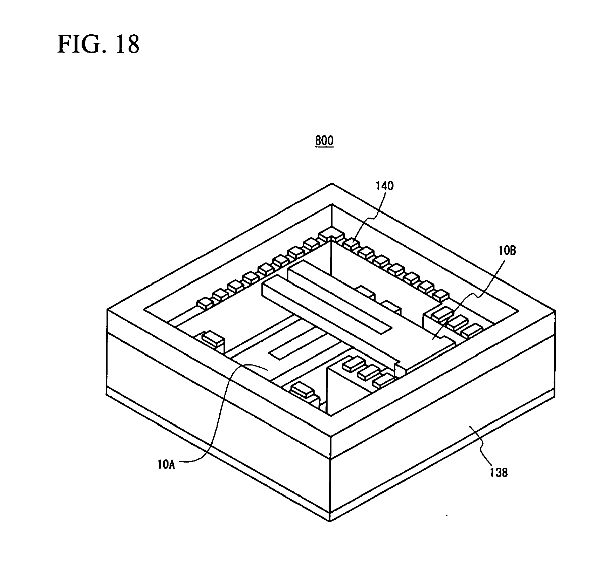

FIG. 18 is a perspective view of an angular velocity sensor 800 in accordance with a seventh embodiment of the present invention. The angular velocity sensor 800 includes two tuning fork resonators 10A and 10B, which are arranged to be crossed at a right angle, yet there is a space between the afore-mentioned two tuning fork resonators 10A and 10B in a direction of thickness. The tuning fork resonators 10A and 10B detect the angular velocity around two axes that are crossed at a right angle. A package 138 is made of ceramics, for example, and is formed in such a manner that the banks that support multiple pads 140 are provided as shown in FIG. 18. The pads and the electrodes of the tuning fork resonators 10A and 10B are bonded by wires, not shown. The tuning fork resonator 10A is supported by a single lead frame provided on the bank positioned at a relatively low place in the package 138. The tuning fork resonator 10B is supported by a single lead frame provided on the bank positioned at a relatively high place in the package 138. The afore-described lead frames have the same configuration as any one of the lead frames described heretofore. Alternatively, the lead frames may be a variation of any one of the lead frames described heretofore. In any case, a space is formed below the lead frame. Thus, it is possible to suppress the change in frequency that occurs before and after such configured angular velocity sensor 800 is mounted on the circuit board and to provide a small-sized two-axis angular velocity sensor having high detection accuracy.

### (Eighth Embodiment)

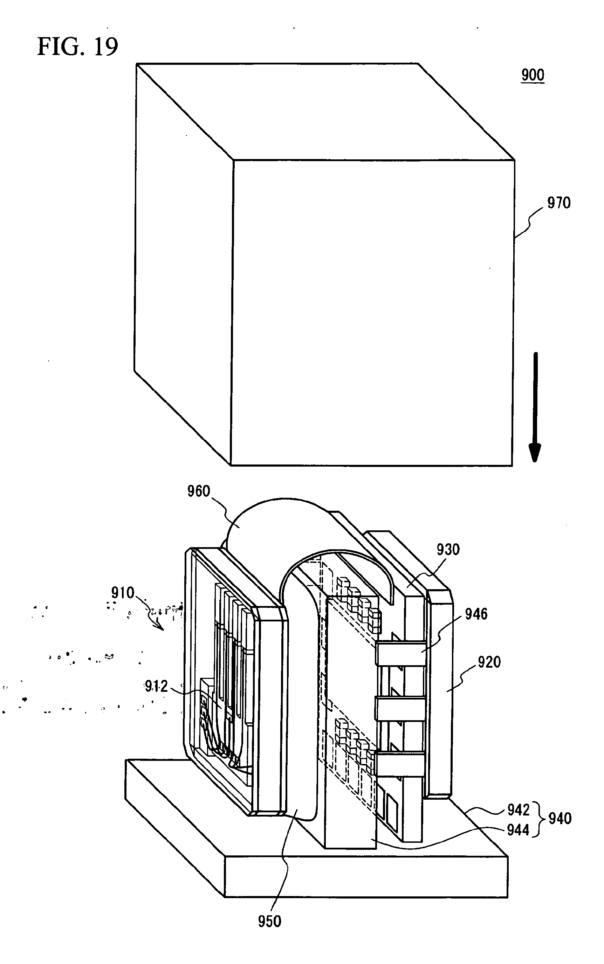

FIG. 19 is an exploded perspective view of an angular velocity sensor 900 in accordance with an eighth embodiment of the present invention. The angular velocity sensor 900 includes an angular velocity sensor and an acceleration sensor. Hereinafter, the angular velocity sensor 900 is referred to as sensor module. The sensor module 900 includes a one-axis angular velocity sensor 910 and an acceleration sensor 920 that can detect three-dimensional angular velocities. A mold frame 940 includes a bottom portion 942 having a rectangular shape and a separator 944 that extends from the bottom portion in a direction perpendicular to the bottom portion 942. The angular velocity sensor 910 is secured to the separator 944 by use of a fixing member 950 such as resin. The angular velocity sensor 910 includes a tuning fork resonator 912 having four arms and a base that supports the arms. The base is supported by lead frames arranged above the space, as described above. The acceleration sensor 920 is attached to one face of a circuit board 930. The circuit board 930 is attached perpendicularly to the bottom portion 942 of the mold frame 940. The acceleration sensor 920 and the separator 944 are coupled by a coupling member 946. The angular velocity sensor 910 and the acceleration sensor 920 are electrically coupled via a flexible printed circuit 960. The angular velocity sensor 910 and the acceleration sensor 920 are sealed with a cap 970.

It is possible to suppress the change in the frequency that occurs before and after such configured angular velocity sensor 910 is mounted on the separator 944, thereby enabling to provide a small-sized sensor module of high detection accuracy having the angular velocity sensor 910 and the acceleration sensor 920.

The present invention is not limited to the above-mentioned embodiments, and other embodiments, variations and modifications may be made without departing from the scope of the present invention. For example, the tuning fork resonator may have two to four arms.

The present invention is based on Japanese Patent Application No. 2005-104441 filed on March 31, 2005 and Japanese Patent Application No. 2005-239711 filed on August 22, 2005, the entire disclosure of which is hereby incorporated by reference.

## Claims

1. An angular velocity sensor comprising:
a tuning fork resonator having multiple arms that extend from a base;
a single lead frame that supports the base; and
a package that supports the single lead frame,
wherein the package and lead frame define a space therebetween.

2. The angular velocity sensor as claimed in claim 1, wherein:
the single lead frame has a bending portion having a cross-section of an inverted U-shape;
the bending portion supports the base; and
the bending portion of the single lead frame and the package define the space.

3. The angular velocity sensor as claimed in claim 1, wherein:
the single lead frame has a bending portion having a trapezoid-shaped cross-section;
the bending portion supports the base; and
the bending portion of the single lead frame and the package define the space.

4. The angular velocity sensor as claimed in claim 1, wherein:
the single lead frame has a bending portion having an M-shaped cross-section;
the bending portion supports the base; and
the bending portion of the single lead frame and the package define the space.

5. The angular velocity sensor as claimed in claim 1, wherein:
the single lead frame has a plane portion that supports the base; and
the plane portion is folded in an L-shaped fashion.

6. The angular velocity sensor as claimed in claim 1, wherein:
the single lead frame has a plane portion that supports the base;
a recess is provided on a face of the package that supports the single lead frame; and
the recess defines the space.

7. The angular velocity sensor as claimed in claim 1, wherein the single lead frame has a U-shaped planar shape.

8. The angular velocity sensor as claimed in claim 1, wherein the single lead frame has a shape of plane plate.

9. The angular velocity sensor as claimed in claim 1, wherein the single lead frame has a contact portion that is in contact with the base, the contact portion being wholly adhered to the base.

10. The angular velocity sensor as claimed in claim 1, wherein the single lead frame has flexibility.

11. The angular velocity sensor as claimed in claim 1, further comprising:
a circuit board that supports the package; and
a supporting substrate that supports the circuit board perpendicularly to a mounting surface of the angular velocity sensor.

12. The angular velocity sensor as claimed in claim 11, wherein a chip part is provided on the circuit board and the package is attached to the circuit board to cover the chip part.

13. The angular velocity sensor as claimed in claim 1, further comprising:
a supporting substrate that supports the package;
connection members supported by the package; and
a circuit board that establishes an electrical connection with the package via the connection members.

14. The angular velocity sensor as claimed in claim 13, wherein a chip part is provided on the circuit board and the package covers the chip part to support the circuit board via the connection members.

15. The angular velocity sensor as claimed in claim 1, further comprising:
a supporting substrate that supports the package; and
an acceleration sensor supported by the supporting substrate.

16. The angular velocity sensor as claimed in claim 15, further comprising a circuit board attached to the supporting substrate,
wherein:
the acceleration sensor is attached to the circuit board; and
the circuit board is electrically coupled by a flexible printed circuit.

17. The angular velocity sensor as claimed in claim 15, further comprising a cap that seals the package and the acceleration sensor.

18. An angular velocity sensor comprising:
multiple units, each of the multiple units including a tuning fork resonator and a single lead frame, the tuning fork resonator having multiple arms that extend from a base, the single lead frame supporting the base; and
a package that houses the multiple units,
wherein the multiple units are arranged in the package so that the multiple units have different angular velocity detection axes.

19. The angular velocity sensor as claimed in claim 18, wherein the multiple units are arranged at an identical height with respect to a surface of the package.

20. The angular velocity sensor as claimed in claim 18, wherein the multiple units are arranged at different heights with respect to a surface of the package.

21. The angular velocity sensor as claimed in claim 18, wherein extending directions of arms of the multiple units are crossed at a right angle and there is a space between the multiple units in a direction of thickness.

22. An angular velocity sensor comprising:
multiple angular velocity sensor elements; and
a circuit board on which the multiple angular velocity sensor elements are mounted,
wherein:
each of the multiple angular velocity sensor elements includes a tuning fork resonator, a single lead frame, and a package, the tuning fork resonator having multiple arms that extend from a base, the single lead frame supporting the base, the package supporting the single lead frame; and
the package and the single lead frame defines a space.

23. The angular velocity sensor as claimed in claim 22, wherein the package of each of the multiple angular velocity sensor elements has an opening surface and the circuit board supports the multiple angular velocity sensor elements to cover the opening surface.

24. The angular velocity sensor as claimed in claim 23, wherein an electronic part is provided on the circuit board and the package of the each of the multiple angular velocity sensor elements is attached to cover the electronic part.

25. The angular velocity sensor as claimed in claim 22, wherein:
an attached surface of the package of each of the multiple angular velocity sensor elements has a first terminal;
the circuit board has a second terminal to be coupled to the first terminal; and
an arrangement of the second terminal determines an angular velocity detection axis of each of the multiple angular velocity sensor elements.
